# EUROPÄISCHE PATENTSCHRIFT

(11) **EP 3 785 248 B1**
(45) Veröffentlichungstag und Bekanntmachung des Hinweises auf die Patenterteilung: **16.03.2022**
(21) Anmeldenummer: 19718343.7
(22) Anmeldetag: 16.04.2019
(51) Int. Cl.: G08C 23/02, H04B 13/02, H04B 11/00

(54) **VERFAHREN ZUR EINSTELLUNG VON SENDEPARAMETERN EINES SENDERS EINER UNTERWASSERKOMMUNIKATIONSEINRICHTUNG**
METHOD FOR ADJUSTING A TRANSMISSION PARAMETER OF A TRANSMITTER OF AN UNDERWATER COMMUNICATION DEVICE
PROCÉDÉ DE RÉGLAGE DE PARAMÈTRES D'ENVOI D'UN ÉMETTEUR D'UN SYSTÈME DE COMMUNICATION SOUS-MARIN

(30) Priorität: 24.04.2018 DE 102018003299
(43) Veröffentlichungstag der Anmeldung: 03.03.2021
(73) Patentinhaber: ATLAS ELEKTRONIK GmbH, 28309 Bremen (DE)
(72) Erfinder: NISSEN, Ivor, 24782 Rickert (DE)
(74) Vertreter: thyssenkrupp Intellectual Property GmbH
(86) Internationale Anmeldenummer: PCT/EP2019/059795
(87) Internationale Veröffentlichungsnummer: WO 2019/206740

(56) Entgegenhaltungen:
- WO-A1-2012/162655
- WO-A2-2016/164146

## Beschreibung

Die Erfindung betrifft ein Verfahren zur Einstellung von Sendeparametern eines Senders einer Unterwasserkommunikationseinrichtung. Die Unterwasserkommunikationseinrichtung ist dabei ein beliebiger Kommunikationsknoten eines Unterwassernetzwerkes.

Aus der US 5 018 114 A und der US 2005/0088916 A1 sind Verfahren zum Betreiben eines Senders einer Unterwasserkommunikationseinrichtung bekannt. Beide Verfahren verwenden einen Sender mit einem Rechner sowie einen Modulator, derart, dass der Modulator einen Sendeverstärker beaufschlagt, der an einen Sende-Wandler angeschlossen ist. In dem Rechner wird eine Nachricht mit einem Prüfwert zusammengestellt. Im Modulator wird die Nachricht moduliert unter Erhalt eines Zeitsignals. Vor dem Aussenden wird die Nachricht elektrisch über einen Demodulator zurück an den Modulator gesendet und ausgewertet. Mit dem Sende-Wandler wird das Signal bei korrekter Auswertung abgestrahlt. Entweder findet ein Sendebetrieb oder ein Empfangsbetrieb statt. Hierfür wird ein Umschalter verwendet. Wenn eine Unterwasserkommunikationseinrichtung sendet, empfängt sie nicht, und umgekehrt. Die Unterwasserkommunikationseinrichtung schaltet nach einer Aussendung in den Empfangsbetrieb um, sie kann daher ihre eigenen Aussendungen nicht empfangen und dekodieren.

Aus der WO 2012/162655 A1 ist eine drahtlose Kommunikationstechnik mit hoher Datenrate durch Metallwände hindurch bekannt, bei der die Vorteile der auf Unterträgern basierenden ratenadaptiven Bitbelastung und der Verringerung des Verhältnisses von Spitzen- zu Durchschnittsleistung (PAPR) durch Symbolrotation im Frequenzbereich in einer adaptiven orthogonalen Frequenzmultiplex- (OFDM-) Ultraschallphysikschicht kombiniert werden.

Die WO 2016/164146 A2 offenbart ein System zur Bereitstellung von Unterwasserkommunikation unter Verwendung des Orbitaldrehimpulses (OAM) welches einen Sender umfasst, der zu übertragende Eingangsdaten unter Verwendung von Vorcodierungsinformationen basierend auf den aktuellen Übertragungskanalbedingungen verarbeitet, um die Datenrate basierend auf den Kanalbedingungen zu maximieren.

In einem Fachbuch (Autoren: John Potter, Joao Alves, Dale Green, Giovanni Zappa, Kim McCoy und Ivor Nissen; veröffentlicht im September 2014, Titel des Kapitels: "The JANUS underwater communications Standard"; Buchtitel: "2014 Underwater Communications and Networking, UComms 2014") ist ein Unterwasser-Übertragungsverfahren mit der Bezeichnung "JANUS" beschrieben. In JANUS sind Sendeparameter beispielsweise das Frequenzband und die Sendeleistung. In JANUS ist ein Prüfwert (CRC) definiert, der die Korrektheit der Nachricht bestätigt. Hieraus kann als erste Stufe die korrekte Dekodierfähigkeit einer gesendeten Nachricht abgeleitet werden.

Die Aufgabe der Erfindung besteht darin, ein Verfahren zum Betreiben eines Senders einer Unterwasserkommunikationseinrichtung so auszubilden, dass eine gesendete Nachricht mit einer hohen Wahrscheinlichkeit korrekt von einer anderen Unterwasserkommunikationseinrichtung empfangen werden kann.

Diese Aufgabe wird erfindungsgemäß durch die Merkmale des Anspruches 1 gelöst.

Das Verfahren dient der Einstellung von mindestens einem Sendeparameter eines Senders einer Unterwasserkommunikationseinrichtung. Das Verfahren empfindet das Prinzip des Kontrollierens des menschlichen Sprechens nach. Dadurch, dass ein Mensch seine eigene Stimme beim Sprechen hört, kann der Mensch seine Aussprache korrigieren. Anders ausgedrückt, kann der Mensch seine Stimme, je nachdem, wie er seine Stimme wahrnimmt, verändern und so modulieren, dass er für andere gut zu verstehen ist. Durch den Mund wird die Sprache ausgesendet, durch die Ohren respektive das Skelett wird parallel die Aussendung wahrgenommen, für gut oder als nicht verständlich empfunden. Es wird instant entweder erneut mit veränderten "Sendeparametern" gesprochen oder die "Sendeparameter" werden beibehalten. Kernpunkt ist dabei die Nutzung der Veränderung durch das Übertragungsmedium und das simultane Senden und Empfangen der eigenen Aussendung. Die Sendeparameter werden ohne eine Rückmeldung des Empfängers geschätzt.

Gemäß einer vorteilhaften Ausgestaltung der Erfindung ist ein Sendeparameter die Sendeleistung. Die Energieressource ist bei Unterwasserkommunikationseinrichtungen wertvoll, ein Senden sollte nur so "laut" wie nötig sein. Ist die Sendeleistung zu "leise" eingestellt, kann der Kommunikationspartner nicht korrekt dekodieren, ist er zu "laut", entsteht ein Übersteuern respektive es entstehen viele Reflektionen und die Durchhaltefähigkeit sinkt.

Gemäß einer vorteilhaften Ausgestaltung der Erfindung ist der mindestens eine Sendeparameter eine Sende-Frequenzbandbreite mit einer oberen Frequenz und einer unteren Frequenz. Da im Unterwasserbereich das Umgebungsgeräusch nicht über die Frequenz gleichverteilt ist, gibt es Frequenzbereiche, die sich bezüglich der Anwendung anbieten oder verbieten, dementsprechend sind die obere Frequenz und die untere Frequenz zu optimieren.

Gemäß einer vorteilhaften Ausgestaltung der Erfindung ist das Empfangs-Hydrophon in einem Mindestabstand vom Sende-Wandler entfernt, wobei der Mindestabstand die Schallgeschwindigkeit geteilt durch eine obere Frequenz geteilt durch 4 ist, wobei die obere Frequenz sich auf eine Sende-Frequenzbandbreite bezieht. Damit ist eine inkohärente Auswertung mit einem signifikanten Feldverteilungswechsel möglich.

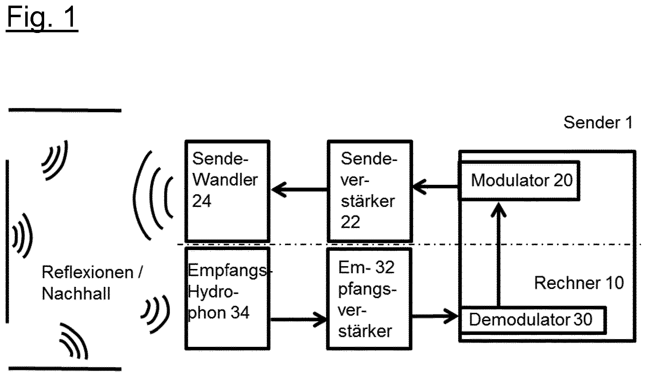

Ausführungsbeispiele der Erfindung werden nachfolgend an Hand der Zeichnung und exemplarisch mit der Nutzung des Übertragungsverfahrens JANUS näher beschrieben. Hierbei zeigt die Fig. 1 einen Sender einer Unterwasserkommunikationseinrichtung als Prinzipskizze.

Das Ausführungsbeispiel bezieht sich auf ein Verfahren zur Einstellung von mindestens einem Sendeparameter einer Unterwasserkommunikationseinrichtung. Das Verfahren weist die nachfolgenden Schritte a) bis j) auf. Jeder Schritt wird erläutert und ergänzt:
a) Das Verfahren verwendet unter Verweis auf Fig. 1 einen Sender 1 mit einem Rechner 10 mit einem Modulator 20, derart, dass der Modulator 20 einen Sendeverstärker 22 beaufschlagt, der an einen Sende-Wandler 24 angeschlossen ist, und derart, dass der Rechner 10 auch einen Demodulator 30 aufweist, der mit einem Empfangshydrophon 34 verbunden ist.
b) In dem Rechner wird eine binäre Übertragungs-Nachricht (die zu übertragende Nachricht) mit einem Übertragungs-Prüfwert (bei JANUS als CRC ausgeführt) zusammengestellt. Für dieses Ausführungsbeispiel wird die Nachricht X=50 16 1 139 252 0 192 gewählt und hierfür der Prüfwert 84 ermittelt. Beides wird zu der binären Übertragungs-Nachricht, HEX 32 10 01 8B FC 00 C0 54, zusammengestellt, die dann insgesamt 64 Bit umfasst.
c) Im Modulator wird diese binäre Übertragungs-Nachricht basierend auf der JANUS-Definition unter Erhalt eines Signals moduliert. Da für dieses Ausführungsbeispiel das Verfahren JANUS verwendet wird, bezeichnen wir dieses als JANUS-Signal. Dafür ist die Angabe des Frequenzbandes (untere Frequenz=4000 Hz, obere Frequenz=8000 Hz), die Detektionsschwelle von 0,6 und die Sendeleistung von 160 dB notwendig. Letztere Angabe entspricht der vollen Aussteuerung des Signals zwischen Amplitudenwerten von -1 und 1.
d) Mit dem Sende-Wandler 24 wird das JANUS-Signal abgestrahlt.
e) Das abgestrahlte JANUS-Signal wird durch das Übertragungsmedium verändert.
f) Alle Signale und damit auch das veränderte JANUS-Signal werden von dem Empfangs-Hydrophon 34 im Sender 1 empfangen und digital gewandelt. Das veränderte JANUS-Signal beinhaltet die Übertragungs-Nachricht und Nachhall (diskrete Echos oder kontinuierlich). Dieser Nachhall entsteht durch Reflexionen an der Wasseroberfläche, am Meeresboden, an Fjordhängen oder Spundwänden und als Volumennachhall. Das veränderte JANUS-Signal beinhaltet auch das vorhandene Umgebungsgeräusch am Ort des Senders, sowie vielfältige weitere Effekte. Durch die Mehrwege-Überlagerung kann es zu destruktiven Interferenzen kommen, Anteile am Signal werden ausgelöscht, zudem sei die zeitliche Spreizung durch den Nachhall mit 50 ms angenommen. Hiervon wird nun ausgegangen.
g) Im Demodulator 30 wird das veränderte JANUS-Signal mit der JANUS-Vorschrift zurückgewandelt unter Erhalt einer demodulierten Nachricht.
h) Aus der demodulierten Nachricht wird im Rechner 10 ein demodulierter Prüfwert ermittelt, der mit dem Übertragungs-Prüfwert verglichen wird. Hier können nun exemplarisch folgende drei Fälle auftreten.
   - Erster Fall: Es liegt die demodulierte Nachricht Y=50 16 1 139 252 0 192 84 vor. Hieraus wird der demodulierte Prüfwert bestimmt, hier 84, und mit dem empfangenen Prüfwert 84 verglichen.
   - Zweiter Fall: Es liegt die demodulierte Nachricht Y=50 16 1 128 225 35 74 195 vor. Hieraus wird der demodulierte Prüfwert bestimmt, hier 195, und mit dem Übertragungs-Prüfwert 195 verglichen.
   - Dritter Fall: Es liegt die demodulierte Nachricht Y=50 16 1 128 225 35 74 194 vor. Hieraus wird der demodulierte Prüfwert bestimmt, hier 195, und mit dem empfangenen Prüfwert 194 verglichen.
i) Nun werden zwei Checks durchgeführt. Erster Check: Standardmäßig wird bei JANUS ein CRC-Prüfwert für die Syntax-Prüfung genutzt. Geprüft wird, ob der demodulierte Prüfwert und Übertragungs-Prüfwert übereinstimmen. Die obigen drei Fälle führen zu folgender Situation
   - Im ersten Fall: Syntax korrekt.
   - Im zweiten Fall: Syntax korrekt.
   - Im dritten Fall: Syntax nicht korrekt.

Zweiter Check: Da der Sender über das Wissen verfügt, welche Nachricht er ausgesendet hat, wird zusätzlich ein semantischer Check durchgeführt. Dies ist eine Inhaltsüberprüfung der demodulierten Nachricht mit der Übertragungs-Nachricht.
- Im ersten Fall: Semantik korrekt → Nachricht korrekt.
- Im zweiten Fall: Semantik nicht korrekt → Mutation liegt vor.
- Im dritten Fall: Nachricht nicht korrekt, da bereits CRC falsch.

Im zweiten Fall würde ein Empfänger ohne das Wissen des Senders von einer syntaktisch korrekten Nachricht ausgehen, da der demodulierte Prüfwert und Übertragungs-Prüfwert übereinstimmen. Die Mutation könnte Schäden im weiteren Verarbeitungsprozess erzeugen (angeordnete Zieltiefe tiefer als Meeresgrund, Rendezvous-Position auf Land, ...). Es wird analog zum dritten Fall mit Schritt j) fortgefahren.

Im ersten Fall stimmen Syntax (CRC korrekt) und Semantik (Inhaltsvergleich), und es wird nicht die Aussendung der Nachricht wiederholt. Jedoch können Sendeparameter für weitere Sendeaufgaben im Hinblick auf eine Optimierung der Datenrate und/oder Emissionsrate für die nächste Aussendung verändert oder beibehalten werden.
j) Stimmen der demodulierte Prüfwert und Übertragungs-Prüfwert oder die demodulierte Nachricht und die Übertragungs-Nachricht jedoch nicht überein (zweiter und dritter Fall), wird der mindestens eine Sendeparameter im Hinblick auf die Robustheit verändert und die Nachricht erneut mit der neuen Einstellung ausgesendet. Es liegt eine iterative Modulation vor.

Der mindestens eine Sendeparameter ist die Sendeleistung. Die Amplitudenwerte, die im Beispiel bei 160 dB beim Signal zwischen -1 und 1 liegen, können mehrfach halbiert werden. Jede Halbierung führt zu einer Abnahme um 6 dB. Wenn festgestellt wird, dass der demodulierte Prüfwert und der Übertragungs-Prüfwert oder die demodulierte Nachricht und die Übertragungs-Nachricht nicht übereinstimmen (weil beispielsweise eine Übersteuerung und starke Reflektionen vorliegen), so ist die Sendeleitung beispielsweise um eine Stufe (z.B. 6 dB) zu reduzieren und die Nachricht erneut auszusenden. Die Folge sind kleinere Echoeinträge und zusätzlich weniger Interferenz. Ein entfernter Kommunikationsempfänger würde ebenfalls von diesem Vorgehen profitieren. Im Hinblick auf eine Einstellung des Sendeparameters der Sendeleistung könnte ergänzend noch die zeitliche Aufspreizung (Echozeit) im veränderten Signal gemessen und berücksichtigt werden.

Der mindestens eine Sendeparameter ist eine Frequenzbandbreite mit einer oberen Frequenz (fmax) und einer unteren Frequenz (fmin). In JANUS ist die Trägerfrequenz (fmax+fmin)/2 mit der Länge der Symbole über den Zusammenhang 26/Bandbreite, sowie Trägerfrequenz/3=Bandbreite, gekoppelt. Falls der Sender nun feststellt, dass er seine eigene Nachricht nicht dekodieren kann bzw. dass der demodulierte Prüfwert und der Übertragungs-Prüfwert oder die demodulierte Nachricht und die Übertragungs-Nachricht nicht übereinstimmen, hat er die Möglichkeit, ein anderes Frequenzband zu nutzen und die Frequenzbandgrenzen fmin und fmax zum Beispiel nach oben zu verschieben. Da auch die höheren Frequenzanteile eines Umweltgeräusches stärker absorbiert werden als niedrigere, ist die Verschiebung in höhere Frequenzen sinnvoll, wenn die Reichweitenverluste akzeptiert werden können. Eine Neuaussendung im höheren Frequenzband mag zu einer Verbesserung im Regelkreislauf führen. Im Hinblick auf eine Einstellung des Sendeparameters der Frequenzbandbreite mit einer oberen Frequenz und einer unteren Frequenz könnte ergänzend noch eine Inter-Symbol-Interferenz (ISI) im veränderten Signal festgestellt und berücksichtigt werden, um kürzere oder längere Signale zu erzeugen und abzustrahlen.

Das Empfangs-Hydrophon 34 ist in einem Mindestabstand vom Sende-Wandler 24 entfernt, wobei der Mindestabstand die Schallgeschwindigkeit geteilt durch eine obere Frequenz geteilt durch 4 ist, wobei die obere Frequenz sich auf eine Sende-Frequenzbandbreite bezieht. Präferiert ist ein Mindestabstand, wobei der Mindestabstand die Schallgeschwindigkeit geteilt durch die obere Frequenz multipliziert mit 3 bis 5, vorzugsweise mit 4 ist, um eine gute inkohärente Auswertung mit einem signifikanten Feldverteilungswechsel zu ermöglichen

### Bezugszeichenliste

- 1: Sender
- 10: Rechner

- 20: Modulator
- 22: Sendeverstärker
- 24: Sende-Wandler

- 30: Demodulator
- 32: Empfangsverstärker
- 34: Empfangs-Hydrophon

## Patentansprüche

1. Verfahren zur Einstellung von mindestens einem Sendeparameter eines Senders einer Unterwasserkommunikationseinrichtung, mit folgenden Merkmalen:
a) das Verfahren verwendet einen Sender (1) mit einem Rechner (10) und einem Modulator (20), derart, dass der Modulator (20) einen Sendeverstärker (22) beaufschlagt, der an einen Sende-Wandler (24) angeschlossen ist, und derart, dass der Rechner (10) auch einen Demodulator (30) aufweist, der über einen zwischengeschalteten Empfangsverstärker (32) an ein Empfangs-Hydrophon (34) angeschlossen ist,
b) in dem Rechner (10) wird eine Übertragungs-Nachricht mit einem Übertragungs-Prüfwert zusammengestellt,
c) im Modulator (20) wird die Übertragungs-Nachricht moduliert unter Erhalt eines Signals,
d) mit dem Sende-Wandler (24) wird das Signal abgestrahlt,
e) das abgestrahlte Signal wird durch das Übertragungsmedium verändert,
f) das veränderte Signal wird von dem Empfangs-Hydrophon (34) empfangen,
g) im Demodulator (30) wird das veränderte Signal demoduliert unter Erhalt einer demodulierten Nachricht,
h) aus der demodulierten Nachricht wird im Rechner (10) ein demodulierter Prüfwert ermittelt, der mit dem Übertragungs-Prüfwert verglichen wird,
i) stimmen der demodulierte Prüfwert und Übertragungs-Prüfwert überein, wird nach einer Inhaltsüberprüfung der demodulierten Nachricht mit der Übertragungs-Nachricht der mindestens eine Sendeparameter für weitere Sendeaufgaben beibehalten oder im Hinblick auf eine Optimierung der Datenrate und/oder Emissionsrate für die nächste Aussendung verändert,
j) stimmen der demodulierte Prüfwert und der Übertragungs-Prüfwert oder die demodulierte Nachricht und die Übertragungs-Nachricht jedoch nicht überein, wird der mindestens eine Sendeparameter im Hinblick auf eine Robustheit verändert und die Übertragungs-Nachricht erneut mit verändertem Sendeparameter oder veränderten Sendeparametern ausgesendet.

2. Verfahren nach Anspruch 1, bei dem der mindestens eine Sendeparameter eine Sendeleistung ist.

3. Verfahren nach Anspruch 1 oder 2, bei dem der mindestens eine Sendeparameter eine Sende-Frequenzbandbreite mit einer oberen Frequenz und einer unteren Frequenz ist.

4. Verfahren nach einem der Ansprüche 1 bis 3, bei dem das Empfangs-Hydrophon (34) in einem Mindestabstand vom Sende-Wandler (24) entfernt ist, wobei der Mindestabstand die Schallgeschwindigkeit geteilt durch eine obere Frequenz geteilt durch 4 ist, wobei die obere Frequenz sich auf eine Sende-Frequenzbandbreite bezieht.

## Claims

1. A method for setting at least one transmission parameter of a transmitter of an underwater communication device, with the following characteristics:
a) the method uses a transmitter (1) with a computer (10) and a modulator (20), in such a way that the modulator (20) influences a transmission amplifier (22) connected to a transmission converter (24) and in such a way that the computer (10) also has a demodulator (30) connected to a receiving hydrophone (34) via an intermediate reception amplifier (32),
b) in the computer (10), a transmission message with a transmission check value is compiled,
c) in the modulator (20), the transmission message is modulated while obtaining a signal,
d) the signal is transmitted with the transmission converter (24),
e) the transmitted signal is modified by the transmission medium,
f) the modified signal is received by the receiving hydrophone (34),
g) in the demodulator (30), the modified signal is demodulated while obtaining a demodulated message,
h) a demodulated check value, which is compared with the transmission check value, is determined from the demodulated message in the computer (10),
i) if the demodulated check value and the transmission check value match, after a content check of the demodulated message with the transmission message the at least one transmission parameter is retained for further transmission tasks, or is modified with a view to optimizing the data rate and/or emission rate for the next transmission,
j) however, if the demodulated check value and the transmission check value or the demodulated message and the transmission message do not match, the at least one transmission parameter is changed with respect to robustness and the transmission message is retransmitted with a changed transmission parameter or changed transmission parameters.

2. The method according to claim 1, in which the at least one transmission parameter is a transmission power.

3. The method according to claim 1 or 2, in which the at least one transmission parameter is a transmission frequency bandwidth with an upper frequency and a lower frequency.

4. The method according to any one of claims 1 to 3, in which the receiving hydrophone (34) is located at a minimum distance from the transmission converter (24), wherein the minimum distance is the speed of sound divided by an upper frequency divided by 4, wherein the upper frequency refers to a transmission frequency bandwidth.

## Revendications

1. Procédé de réglage d'au moins un paramètre d'émission d'un émetteur d'un dispositif de communication sous-marin, ayant les caractéristiques suivantes :
a) le procédé emploie un émetteur (1) comprenant un ordinateur (10) et un modulateur (20) de telle sorte que le modulateur (20) alimente un amplificateur d'émission (22) qui est raccordé à un convertisseur d'émission (24), et de telle sorte que l'ordinateur (10) possède également un démodulateur (30) qui est raccordé à un hydrophone de réception (34) par le biais d'un amplificateur de réception (32) intermédiaire,
b) un message de transmission ayant une valeur de contrôle de transmission est assemblé dans l'ordinateur (10),
c) le message de transmission est modulé dans le modulateur (20) en obtenant un signal,
d) le signal est émis avec le convertisseur d'émission (24),
e) le signal émis est modifié par le milieu de transmission,
f) le signal modifié est reçu par l'hydrophone de réception (34),
g) le signal modifié est démodulé dans le démodulateur (30) en obtenant un message démodulé,
h) une valeur de contrôle démodulée est déterminée dans l'ordinateur (10) à partir du message démodulé, laquelle est comparée avec la valeur de contrôle de transmission,
i) si la valeur de contrôle démodulée et la valeur de contrôle de transmission coïncident, après un contrôle du contenu du message démodulé avec le message de transmission, l'au moins un paramètre d'émission est conservé pour des tâches d'émission supplémentaires ou modifié pour l'émission suivante en vue d'une optimisation du débit de données et/ou du débit d'émission,
j) toutefois, si la valeur de contrôle démodulée et la valeur de contrôle de transmission ou le message démodulé et le message de transmission ne coïncident pas, l'au moins un paramètre d'émission est modifié en vue d'une robustesse et le message de transmission est une nouvelle fois émis avec le paramètre d'émission modifié ou des paramètres d'émission modifiés.

2. Procédé selon la revendication 1, avec lequel l'au moins un paramètre d'émission est une puissance d'émission.

3. Procédé selon la revendication 1 ou 2, avec lequel l'au moins un paramètre d'émission est une largeur de bande de fréquences d'émission ayant une fréquence haute et une fréquence basse.

4. Procédé selon l'une des revendications 1 à 3, avec lequel l'hydrophone de réception (34) est éloigné du convertisseur d'émission (24) d'un écart minimal, l'écart minimal étant la vitesse du son divisée par une fréquence haute divisée par 4, la fréquence haute se rapportant à une largeur de bande de fréquences d'émission.
